(19) Europäisches Patentamt
European Patent Office
Office européen des brevets

(11) **EP 2 178 223 B1**

(12) **EUROPEAN PATENT SPECIFICATION**

(45) Date of publication and mention
of the grant of the patent:
**19.06.2013 Bulletin 2013/25**

(51) Int Cl.:
***H04B 7/06*** *(2006.01)*     ***H04B 7/08*** *(2006.01)*

(21) Application number: **09172778.4**

(22) Date of filing: **12.10.2009**

(54) **Method for reception of a signal and corresponding transmission method**

Verfahren zum Empfangen eines Signals und zugehöriges Übertragungsverfahren

Procédé de réception d'un signal et procédé de transmission correspondant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.10.2008 FR 0857057**

(43) Date of publication of application:
**21.04.2010 Bulletin 2010/16**

(73) Proprietor: **Thomson Licensing, Inc.
92100 Boulogne-Billancourt (FR)**

(72) Inventors:
• **Guillouard, Samuel
92648, BOULOGNE CEDEX (FR)**
• **Dore, Renaud
92648, BOULOGNE CEDEX (FR)**

(74) Representative: **Le Dantec, Claude
Technicolor
1-5 rue Jeanne d'Arc
92130 Issy-les-Moulineaux (FR)**

(56) References cited:
**WO-A-01/35537**      **WO-A-02/058311**
**US-A1- 2007 054 692**

**Description**

**1. Scope of the invention**

The invention relates to the domain of telecommunications and more specifically to the wireless transmission and reception of data, in a system comprising more than one transmitters transmitting signals representative of the same data, in a synchronous manner and at the same frequency.

**2. Prior art**

According to the prior art, the broadcasting of services, for example television services, is performed by transmitters of heightened power having a limited range with shadow zones, that is to say zones not covered by the broadcast, particularly closed zones (some supermarkets or buildings for example) or distant from the transmitter. In order to improve the broadcast coverage, particularly in the shadow areas, it is known in the art to distribute several transmitters, for example of less heightened power, providing better coverage for these zones. The modulations at multiple sub-carriers of OFDM (Orthogonal Frequency Division Multiplexing) type are relatively efficient for data broadcasting through a channel subject to disturbances (for example, a channel with multiple paths creating echoes), as is particularly the case in the shadow zones.

According to a technique known in the prior art and called SFN (Single Frequency Network), several transmitters transmit synchronously a single OFDM signal. In this way, a receiver receives a combination of signals from several transmitters and decodes the combination obtained in this manner using the properties specific to the OFDM for the cancellation of inter-symbol interferences.

In a wireless non-SFN network system, a receiver can establish a propagation channel pulse response, from which various propagation responses can be extracted, with their relative phase and power level. In a MIMO (Multiple Input Multiple Output) system, the same treatment can be carried out for each pair comprising a transmission antenna and a reception antenna with as many pulse responses as there are possible pairs.

The SFN technique has the disadvantage for the receiver of not being able to distinguish the transmission path from such and such transmitter, each of the transmitters transmitting signals synchronously, at the same frequency and representing the same data coded with the same encoder. There is therefore no information in the signal transmitted that enables the receiver to identify the transmitter.

It is known in the prior art (specification DVB-T2 "Digital Video Broadcasting - Terrestrial 2" edited by ETSI (European Telecommunication Standards Institute) to transmit a first principal signal transmitted by all the transmitters using the OFDM SFN technique and a second signal, non-SFN, transmitted in parallel by each of the transmitters, the second signal comprising an item of information enabling the identification of the corresponding transmitter.

The disadvantage of this technique is the requirement to transmit an additional non-SFN signal, which particularly complicates the design of transmitters implementing such a technique and the corresponding receivers.

**3. Summary of the invention**

The purpose of the invention is to overcome the disadvantages of the prior art.

More specifically, the purpose of the invention is to enable a receiver to be able to identify easily a signal transmitter.

The invention relates to a method for the reception of a signal by a receiver, a received signal comprising a combination of signals transmitted by a plurality of transmitters synchronously, at a same frequency and representative of the same data coded with a same first code, each transmitter of said plurality transmitting frames at a determined power and phase. In order to identify a signal transmitter, the method comprises the following steps:

- reception of a combined signal comprising a first signal and second signal,
  the first signal being transmitted and weighted with a first complex weighting coefficient by each transmitter of a first subset,
  the second signal being transmitted and weighted with a second complex weighting coefficient by each transmitter of a second subset,
  the ratio of the first and second complex weighting coefficients for at least a first temporal interval being different from the ratio of the first and second complex weighting coefficients for at least a second temporal interval, and
- determination of a parameter specific to the first subset or to the second subset from the signal received and from an information representative of at least the first and second complex weighting coefficients and the associated time intervals.

Each subset of transmitters transmits weighted signals of a determined coefficient, thus enabling the receiver to identify the transmitters having transmitted signals forming the received combined signal. The parameter specific to a subset is represented by specifically the signal contribution of the transmitter (or the subset of transmitters) in the transmission of signals by the different transmitters (or subsets of transmitters) forming the combined signal received by the receiver, the energy contribution of the transmitter (or subset of transmitters) or even the position of the transmitter (or subset of transmitters).

According to a specific characteristic, the method comprises a step of differentiation of signals resulting from a first coding applied to data transmitted by at least a first antenna and from a second coding different from the first coding applied to the data transmitted by at least a second antenna, a first and second transmitter comprising respectively the at least a first antenna and the at least a second antenna, or a transmitter comprising the at least a first and second antennas.

This specific characteristic corresponds to the reception of a signal from the combination of signals transmitted by the transmitters forming a MIMO or cooperative MIMO network.

According to another characteristic, the method comprises a step of determination of a contribution specific to the first subset and/or second subset in the combined signal.

Advantageously, the method comprises a step of reception, by the receiver, of information representative of the at least first and second complex weighting coefficients and the associated time intervals.

According to a specific characteristic, the method comprises a step of determination of the energy contribution of at least a subset from the combined signal and the parameter specific to the at least one subset.

Advantageously, the method comprises the steps of:

- determination of a difference in time for the propagation of signals transmitted between respectively the at least two subsets and the receiver from the combined signal and the parameters specific to the at least two subsets,
- determination of a position relating to the receiver with respect to the at least two subsets.

According to a particular characteristic, the method comprises the steps of:

- reception of an information representative of the geographical position of the transmitters of the at least two subsets,
- determination of a geographical position of the receiver.

According to an advantageous characteristic, the method comprises a step of transmission of the position of the receiver.

The invention also relates to a method for transmission of a signal by a plurality of transmitters synchronously, at the same frequency and representative of the same data coded with the same first code, each transmitter transmitting frames at a determined power and phase. Each transmitter of a first subset transmits a first signal weighted by a first weighting coefficient, each transmitter of a second subset transmits a second signal weighted by a second complex weighting coefficient, the ratio of the first and second complex weighting coefficients for at least a first time interval being different from the ratio of the first and second complex weighting coefficients for at least a second temporal interval.

Advantageously, the weighting coefficients are attributed in a cyclic manner temporally.

According to a particular characteristic, at least one transmitter of the plurality of transmitters receives a request for modification of the complex weighting coefficient weighting the signal transmitted by at least one transmitter.

According to an advantageous characteristic, at least the first weighting coefficient or the second weighting coefficient modifies the transmission power of at least a first antenna of at least one transmitter of the first or second subset comprising at least two antennas, the difference in power applied to the first antenna being transferred respectively to the at least one second antenna of said transmitter so that the overall transmission power of said transmitter is constant.

According to a specific characteristic, the first weighting coefficient takes a null value for the first temporal interval and a non-null value for the second temporal interval.

Advantageously,

the first weighting coefficient takes a determined value for the first temporal interval and opposite value for the second temporal interval.

## 4. List of figures

The invention will be better understood, and other specific features and advantages will emerge upon reading the following description, the description making reference to the annexed drawings wherein:

- figure 1 illustrates a broadcasting system implementing several transmitters, according to a particular embodiment of the invention;
- figure 2 presents a very diagrammatical block diagram of a transmitter of the system in figure 1, according to a particular embodiment of the invention,
- figure 3 presents a very diagrammatical block diagram of a receiver of the system in figure 1, according to a particular embodiment of the invention,
- figures 4 and 5 diagrammatically illustrate a transmitter and a receiver of the system in figure 1, respectively, according to the invention,
- figures 6 to 9 show a method for reception of data according to particular embodiments of the invention, implemented by a receiver of the system of figure 1, and
- figure 10 illustrates a method for transmitting data according to a particular embodiment of the invention, implemented by a transmitter of the system in figure 1.

## 5. Detailed description of the invention

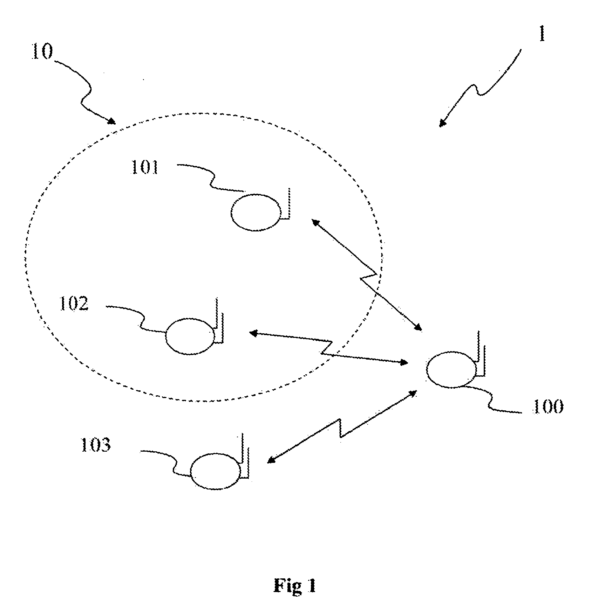

**Figure 1** shows a wireless communications system 1 implementing several transmitters 101, 102 and 103, the transmitters 101 and 102 forming a subset of transmitters 10, and a receiver 100, according to a particular embodiment of the invention. The transmitter 101 has a single transmission antenna. The transmitters 102 and 103 are of MIMO type and each have a MIMO encoder and several antennas transmitting a MIMO type signal. The receiver 100 is of MIMO type and has a MIMO decoder. The receiver 100 is able to receive and decode signals transmitted by the transmitters 101, 102 and 103.

Advantageously, the receiver 100 of the system 1 is a portable device, for example a portable telephone or portable terminal adapted to receive and process broadcast services (for example the display of video data) or a measurement device adapted to analyze signals received (for example measurement of the power of the signal received).

According to a variant, the receiver 100 only has a single reception antenna.

Advantageously, the transmitters 101, 102, and 103 of the system 1 are fixed devices. The transmitters are high powered transmitters adapted to broadcast data over a wide coverage area or average or low powered transmitters adapted to broadcast over a more restricted coverage area. According to a variant, one at least of the transmitters 101, 102 and 103 forms a system covering a "picocell", that is to say a small area, such as the interior of a building, a supermarket, a station, that is having a range of a few dozen metres (for example less than 50m). According to another variant, at least one of the transmitters forms a system designed to cover a "femtocell" that is an area restricted to a smaller size than a picocell, such as some rooms of a house or building, one floor of a building, a plane, that is to say having a range of a few metres (for example less than 10 metres).

According to a variant, all the transmitters are of SISO (Single Input Single Output) type and have only a single antenna. The transmitters form a synchronized network transmitting a same content at a same frequency, that is to say the transmitters operate on a single frequency (that is with a negligible deviation in frequency with respect to the OFDM system considered (typically less than 1 Hz for a DVB-T type system)) in a synchronous manner (that is with a negligible temporal deviation (for example less than 1 $\mu$s) and without temporal sliding of a signal transmitted by a transmitter with respect to another signal transmitted by another transmitter), the transmission frequency being synchronized on the different transmitters, for example by the reception of a reference frequency provided by an external element (for example by GPS (Global Positioning System) satellite or terrestrial broadcast station of a reference time or frequency).

According to another variant, all the transmitters are of MIMO type and have several antennas transmitting a MIMO signal. According to this variant, the transmitters also form a synchronized network transmitting a same content at a same frequency.

According to another implementation, the transmitters of the system 1 form a cooperative MIMO system in which the transmitters have indifferently one or more antennas. Such a cooperative MIMO system uses antennas distributed over several transmitters, that is to say that the signal transmitted is distributed spatially between several antennas that can belong to several transmitters. The complete signal, with all the spatial flows, is combined in the air to be received by the receiver. The transmitters of such a cooperative MIMO system also form a synchronized network transmitting a same content at a same frequency.

According to another variant, some transmitters of the system are of MIMO type, whether cooperative or not, and the others are of SISO type.

Advantageously, the transmitters forming a subset have a common characteristic, for example are situated in a same geographical area or define a same sub-network or offer similar services. The determination of the barycentre of a subset for the localization of a receiver with respect to this subset is particularly advantageous when the transmitters form the subset belonging to a same geographical area.

According to a variant, the definition of a subset by the transmitters that it contains is fixed in time or varied in time. Advantageously, the definition of a subset by the transmitters that it contains is modified by request, for example by request from the terminal or by request from the network manager.

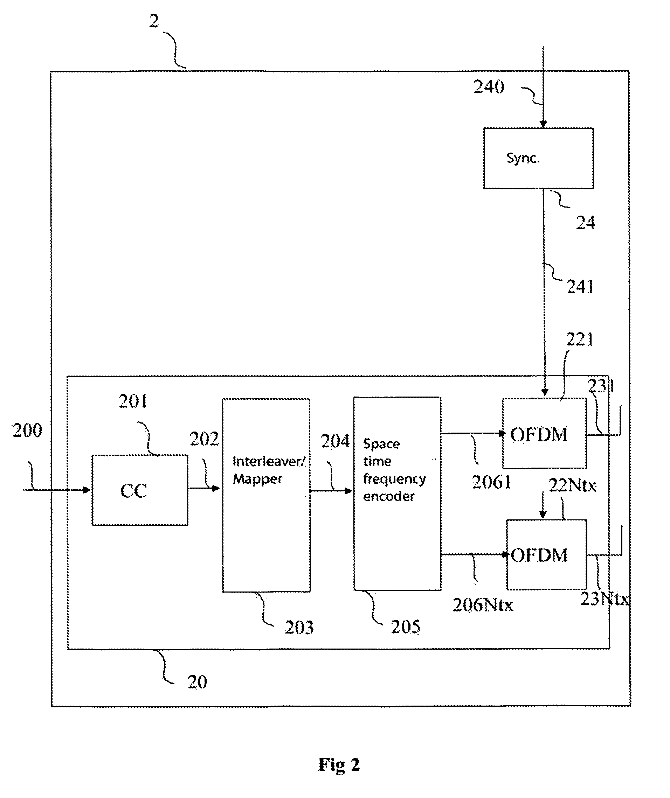

**Figure 2** shows an architecture of a transmitter 2 adapted to broadcast data to a receiver according to a particular embodiment of the invention. The transmitters 102 and 103 have, for example, the architecture of the transmitter 2.

The transmitter 2 comprises:

- an encoder 20 receiving data 200,
- $Ntx$ OFDM modulators 221 to $22Ntx$ transmitting OFDM symbols to at least one antenna respectively 231 to 23$Ntx,$ and
- a synchronisation module 24 receiving a synchronisation signal 240 and transmitting a signal 241 synchronizing the OFDM modulators 221 to 22$Ntx.$

The signal 240 is for example a signal including a precise timestamp or a precise synchronization signal, for example provided by a GPS receiver or even an Internet network (according to the PTP (Precision Time Protocol) protocol according to the IEEE (Institute of Electrical and Electronic Engineers) standard. The synchronization module 24 generates the signal 241. Advantageously, the OFDM modulators are synchronized with a precision in the order of $1\mu s$ and more generally with a precision that enables the guard intervals of OFDM symbols to absorb, at the level of the receivers, the possible offsets between the transmitters and the transmission delays linked to the paths followed by the broadcast signals (guard intervals having a duration greater than or equal to the maximum value of the sum of offsets between transmitters and the transmission delays).

The encoder 20 comprises:

- a channel encoder 201 receiving the data 200, protecting them with a channel coding (for example convolutional code or in block) against the errors linked to a noisy transmission and shaping them to form blocks of coded data 202,
- an interlacer/mapper 203, the mapper modulating the coded data 202 on constellations at x points associated for example with modulations of xQAM (quadrature amplitude modulation with x having a value of for example 16, 64 or 256) type or xPSK (Phase Shift Keying) with x having a value of for example 4, 8, 16, 32) type receiving coded data 202 and producing modulated symbols 204 via the mapper, and
- a MIMO encoder 205 (or space time frequency encoder) coding the modulated symbols 204 to form $Ntx$ flows of MIMO data blocks 2061 to 206Ntx intended respectively for each of the OFDM modulators 221 to 22$Ntx.$
- $Ntx$ OFDM modulators 221 to 22Ntx constituted principally of an IFFT (Inverse Fast Fourrier Transform) operator to generate OFDM symbols, the OFDM modulators comprising advantageously a multiplier at their output to apply to the signal a weighting coefficient in a synchronous manner with the rhythms of the frames and the OFDM symbols. According to a variant, the multiplier is an additional module placed at the output of the OFDM modulator.

Here, the antenna modules 231 to 23$Ntx$ comprise the radio or RF (Radio Frequency) part, and in particular the frequency transpositions, amplifications and filtering as well as a transmitting antenna.

The mapper 203 generates groups of modulated Q symbols. Q is for example equal to 1600 and is worth the product of the rate of code used by the MIMO encoder 205 by the number $Ntx$ of transmitter antenna modules 231 to 23$Ntx$ and by the number $m$ of sub-carriers associated with the encoder 20. m is for example equal to 800 with an encoder rate 205 at 1 (with a full rank encoder of BLAST type) and two antenna modules $(Ntx= 2)$. m is for example equal to 1600 with an encoder rate 205 at 0.5 (with an Alamouti type encoder) and 2 antenna modules $(Ntx= 2)$.

Advantageously, the total number of subcarriers is less than the FTT (Fast Fourier Transform) size used in the OFDM modulators.

The encoder 205 encodes the modulated symbols at input with a spatial multiplexing (for example based on a BLAST multiplexing of Bell laboratories (as described, for example, in the document written by G. J. Foschini, named "Layered Space-Time Architecture for Wireless Communication in a Fading Environment When Using Multiple Antennas" and edited in the Bell Labs Technical Journal, Vol. 1, No. 2, Autumn 1996, pp 41-59) or a STBC/SFBC code (Space Time Block Code/ Space Frequency Block Code). The STBC/SFBC code is, for example, an Alamouti or Golden orthogonal code (for example). A Golden code is described in the document "The Golden Code: A 2 x 2 Full-Rate Space-Time Code with Non-Vanishing Determinants," written by J.-C. Belfiore, G. Rekaya, E. Viterbo (and published in IEEE Transactions on Information Theory, vol. 51, No. 4, pp. 1432-1436, April 2005.). According to a variant, the STBC code is described in "Space-Time block codes from orthogonal designs" written by V.Tarokh, H. Jafarkhani, and R. A. Calderbank (and published in IEEE Transactions on Information Theory, vol. 45, pp. 1456-1467, in july 1999). An Alamouti orthogonal code is described in the document "A simple transmit diversity technique for wireless Communications" in the IEEE Journal on selected area in communications in October 1998). At its output, the encoder 205 and the MIMO data blocks 2061 to 206$Ntx$ (respectively 2061 to 2060$Ntx$) are assigned to an OFDM modulator.

According to a variant, the transmitters function in SISO mode or cooperative MIMO mode on a single antenna.

In particular, in SISO mode, the transmitter 2 does not comprise MIMO coding and comprises a single OFDM modulator associated with an antenna module, the modulator 203 then directly supplies the OFDM modulator. The transmitter 101 has for example, the architecture of such a transmitter 2 SISO or cooperative MIMO on a single antenna.

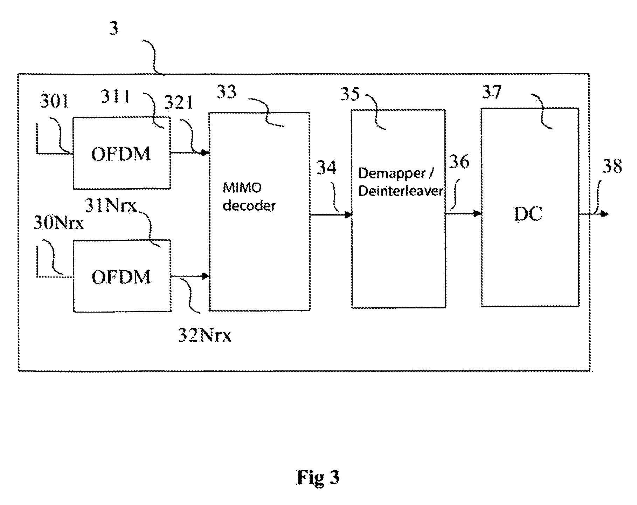

**Figure 3** represents an architecture of a data receiver 3 according to a specific embodiment of the invention. The receiver 3 receives a signal transmitted by the transmitter 2 via a wireless channel. The receiver 100 has, for example the architecture of receiver 3. The transmission channel is noisy and comprises an AWGN (Additive White Gaussian Noise) and other noises such as interference for example. The signal transmitted can also be affected by multi-path echoes and/or Doppler effect.

The receiver 3 comprises:

- N*rx* antennas 301 at 30N*rx*;
- N*rx* OFDM demodulators 311 to 31 N*rx* each demodulating a modulated noisy OFDM signal transmitted by an antenna respectively 301 to 30N*rx*,
- a time/frequency space decoder 33,
- a demapper/deinterlacer 35, and
- a channel decoder 37.

The receiver 3 corresponds to the transmitter 2 (specially for the modulation and coding used by the transmitter). According to a variant using a simple carrier modulation in the transmitter, the OFDM demodulators are replaced by corresponding simple carrier demodulators.

The receiver 3 comprises *Nrx* receiver antennas 301 to 30*Nrx* so that the signal received 301 to 30Nrx can be represented by a matrix *Nrx*N,* or in an equivalent manner by a vector **R** (*Nrx*N)*1*. N is for example equal to 2 and represents the time interval and/or frequency occupied by the MIMO encoder.

The time/frequency space decoder 33 receives a signal from the OFDM demodulators 311 to 31Nrx and carries out the MIMO decoding (corresponding to a dual operation of the encoder 205). A converted signal 34 is provided to the demapper/deinterleaver 35.

The demapper/deinterleaver 35 carries out the dual interleaver/mapper operation 203 of the transmitter 2; it identifies for example the points of the constellation transmitted and also provides information on the reliability of each of these points.

The channel decoder 37 carries out a decoding adapted to the encoder 201 of the transmitter 2. It is constituted for example of a Viterbi type lattice decoder to correct possible errors at the output of the deinterleaver.

According to a variant, the receiver does not operate in MIMO mode. Specifically, the receiver 3 does not understand the MIMO decoding and understands a single OFDM demodulator associated with an antenna.

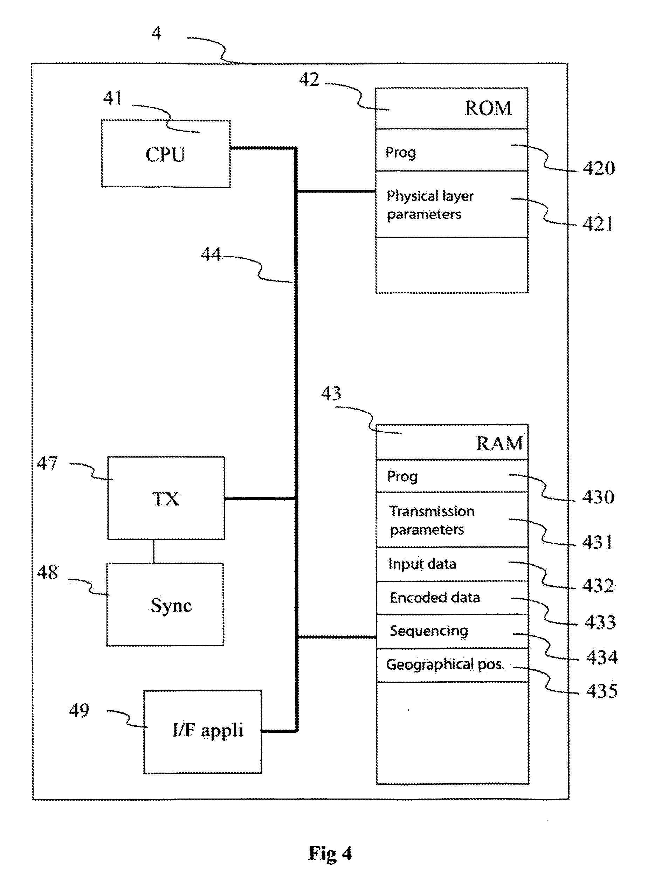

Figure 4 illustrates schematically a hardware embodiment of a transmitter 4 corresponding for example to the transmitter 2.

The transmitter 4 comprises the following elements, connected to each other by an bus 44 of addresses and data, that also transports a clock signal:

- a microprocessor 41 (or CPU),
- a non-volatile memory of the ROM (Read Only Memory) type 42,
- a Random Access Memory or RAM 43,
- an interface 47 adapted for the transmission of data sets (for example broadcasting of services or multipoint to point or point to point transmission,
- an interface 48 suitable for receiving the synchronisation signal 240 and for synchronising the interface 47, and/or
- an MMI (Man Machine Interface) interface 49 or to a specific application suitable for displaying information for a user and/or inputting data or parameters (for example the setting of subcarriers and services to be transmitted).

It is noted that the word "register" used in the description of memories 42 and 43 designates in each of the memories mentioned, a memory zone of low capacity (some binary data) as well as a memory zone of large capacity (enabling a whole programme to be stored or all or part of the data representing services received and to be broadcast).

The memory ROM 42 comprises in particular:

- a program "prog" 420,
- parameters 421 of physical layers, and

The algorithms implementing the steps of the method specific to the invention and described below are stored in the ROM 42 memory associated with the transmitter 4 implementing these steps. When powered up, the microprocessor 41 loads and runs the instructions of these algorithms.

The random access memory 43 notably comprises:

- in a register 430, the operating programme of microprocessor 41 responsible for switching on of transmitter 4,
- the transmission parameters 431 (for example parameters for modulation, encoding, MIMO, recurrence of frames),
- incoming data 432,
- coded data 433 for transmission of data,
- data 434 representative of a sequence of weighting coefficients applied to signals transmitted during given time intervals (for example value of weighting coefficients according to determined time intervals), and
- data 435 representative of the geographical position of the transmitter 4.

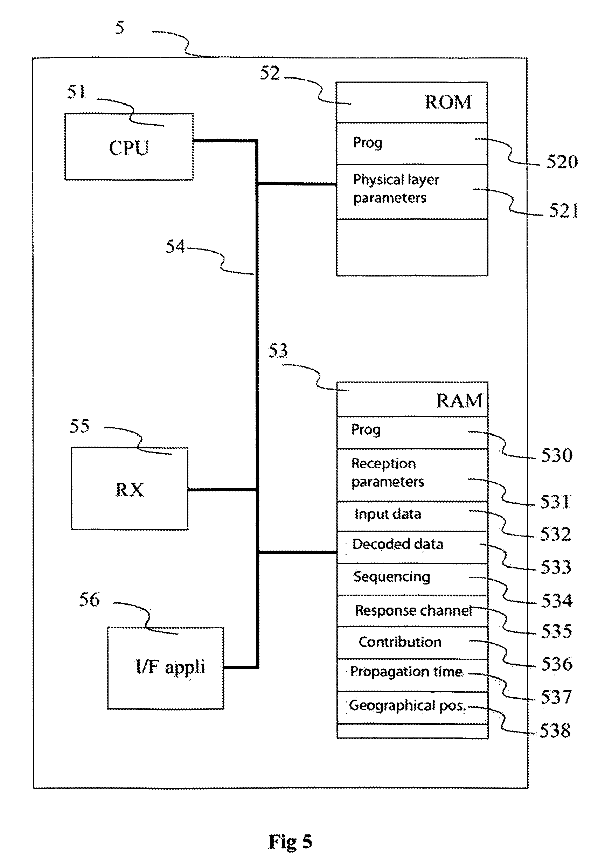

**Figure 5** illustrates schematically a hardware embodiment of a receiver 5 belonging to the system 1, corresponding for example to the receiver 3 and adapted to receive and decode the signals transmitted by the transmitters 2 (for example 101 to 103).

The receiver 5 comprises the following elements, connected to each other by a bus 54 of addresses and data, that also transports a clock signal:

- a microprocessor 51 (or CPU),
- a non-volatile memory of the ROM (Read Only Memory) type 52,
- a Random Access Memory or RAM 53,
- a radio interface 55, and
- an MMI interface 56 adapted for displaying information for a user and/or inputting data or parameters (for example the setting of sub-carriers and data to be transmitted).

It is noted that the word "register" used in the description of memories 52 and 53 designates in each of the memories mentioned, a memory zone of low capacity as well as a memory zone of large capacity (enabling a whole programme to be stored or all or part of the data representing data received and decoded).

The memory ROM 52 comprises in particular:

- a "prog" 520 program, and
- parameters 521 of physical layers.

The algorithms implementing the steps of the method specific to the invention and described below are stored in the ROM 52 memory associated with the receiver 5 implementing these steps. When powered up, the microprocessor 51 loads and runs the instructions of these algorithms.

The random access memory 53 notably comprises:

- in a register 530, the operating programme of the microprocessor 51 responsible for switching on the receiver 4,
- the reception parameters 531 (for example parameters for modulation, encoding, MIMO, recurrence of frames),
- incoming data 532 corresponding to the data received and decoded by the receiver 55,
- decoded data 533 formed to be transmitted at the interface to the application 56,
- data 534 representative of the sequence of weighting coefficients applied to the signals transmitted during given time intervals,
- data 535 representative of a determined channel response of a system formed by the transmitters and the receiver,
- data 536 representative of a parameter specific to each of the determined transmitters or sets of transmitters (for example the contribution specific to a transmitter in the signal as received by the receiver),
- data 537 representative of the determined signal propagation time between the transmitters and the receiver, and
- data 538 representative of a geographical position, relative or absolute, determined of the receiver.

The data representative of a geographical position are, for example, transmitted in a regular manner or on demand by the transmitters or by a server (via a wireless access using transmitters, another wireless access or a wired access) so that a receiver 5 can maintain updated a table of geographical positions of the closest transmitters or for which the contribution is significant. Advantageously, the receiver 5 comprises in the RAM a position table, partial or complete that can for example be updated upon reception of the corresponding data. According to a variant, the receiver 5 comprises in the RAM a register corresponding to the geographical position of the transmitters.

Other structures of the transmitter 4 and/or of the receiver 5 than those described with respect to the figures 4 and 5 are compatible with the invention. In particular, according to variants, the transmitters and/or the receivers compatible with the invention are implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 55 is adapted for the reception of signals broadcast by the transmitters 101 to 103 of the system 1.

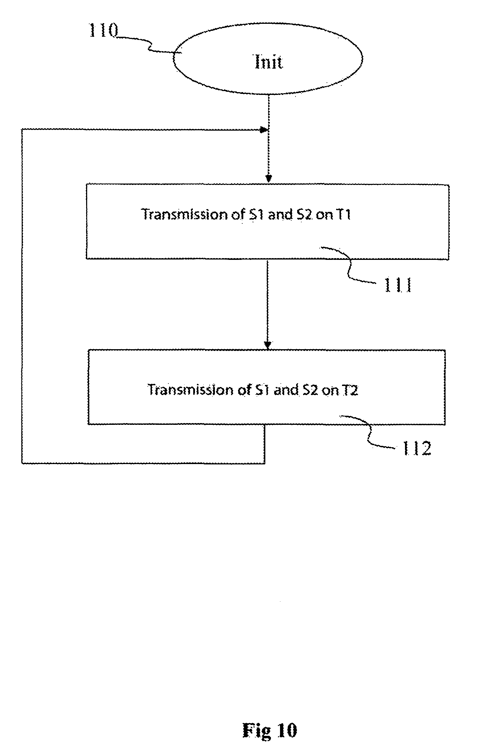

**Figure 10** shows a method for transmission of a signal implemented in two sub-sets of transmitter(s) each comprising at least one transmitter 4, according to a particularly advantageous non-restrictive embodiment of the invention. For reasons of clarity, the example implemented is described for subsets of transmitter(s) each comprising a transmitter and the term transmitter is thus preferred to that of subset.

During an initialisation step 110, the various parameters of each transmitter are updated. In particular, the parameters corresponding to the signals to be broadcast and to the corresponding sub-carriers are initialised in any manner (for example, following the reception of initialisation messages transmitted by one of the transmitters, known as master transmitter or by a server not represented of system 1, or by operator commands).

Next, during a step 111, a first transmitter (for example transmitter 102) transmits a first signal $S_1$ intended for receiver 100 during a first time interval T1 and a second transmitter (for example transmitter 103) transmits a second signal $S_2$ intended for receiver 100 during the same first time interval T1. The signals $S_1$ and $S_2$ are transmitted synchronously, that is to say with a negligible deviation (for example less than 1 $\mu$s) and without temporal sliding of one with respect to another, at a same frequency, that is to say with a negligible frequency deviation with respect to the OFDM system considered (typically less than 1 Hz for a DVB-T type system) and are representative of the same data encoded with a same code by an encoder 20, S being the representative signal of the encoded data. The first signal $S_1$ is assigned a first complex weighting coefficient $K_1$ and the second signal is assigned a second complex weighting coefficient $K_2$ during the first time interval T1. The following is thus obtained: $S_1=K_1.S$ and $S_2=K_2.S$.

Then during a step 112, the first transmitter transmits the first signal $S_1$ intended for the receiver 100 during a second time interval T2 and during the same time interval T2, the second transmitter transmits the second signal $S_2$, the two signals being transmitted according to the SFN technique. During the second time interval T2, the signal $S_1$ is assigned a first complex weighting coefficient $K'_1$ whose value is different from $K_1$ and the signal $S_2$ is assigned the complex weighting coefficient $K_2$. The complex weighting coefficients $K_1$, $K'_1$ and $K_2$ are selected in such a way that the ratio $K_1/K_2$ is different from the ratio $K'_1/K_2$. The following is thus obtained: $S_1=K'_1.S$ and $S_2=K_2.S$.

Transmission of signals $S_1$ and $S_2$ is synchronised according to any methods known by those skilled in the art, such as for example GPS synchronisation ou by control from a reference clock.

The number of transmitters 4 is not restricted to two and can be for example 2, 3, 4, 10, etc. Generally, a complex weighting coefficient is assigned to the signal transmitted by each transmitter, the value of the weighting coefficient varying over time according to a defined sequence. In the case where 3 transmitters transmit respectively the signals $S_1$, $S_2$ and $S_3$, the sequence of assigning of complex weighting coefficients is as follows for the time intervals T1, T2 and T3:

Table 1

|  | Transmitter 1 | Transmitter 2 | Transmitter 3 |
|---|---|---|---|
| T1 | $S_1=K_1.S$ | $S_2=K_2.S$ | $S_3=K'_3.S$ |
| T2 | $S_1=K_1.S$ | $S_2=K'_2.S$ | $S_3=K_3.S$ |
| T3 | $S_1=K'_1.S$ | $S_2=K_2.S$ | $S_3=K_3.S$ |

The complex weighting coefficients $K_1$. $K_2$, $K_3$, $K'_1$, $K'_2$ and $K'_3$ are then selected in such a way that:

- the ratio $K_1/K_2$ is different to the ratio $K_1/K'_2$ or the ration $K_2/K_3$ is different to the ratio $K'_2/K_3$ or the ratio $K_1/K'_3$ is different to the ratio $K_1/K'_3$, and
- the ratio $K_1/K'_2$ is different to the ratio $K'_1/K_2$ or the ratio $K'_2/K_3$ is different to the ratio $K_2/K_3$ or the ratio $K_1/K_3$ is different to the ratio $K'_1/K_3$.

In a system comprising n transmitters transmitting respectively the signals $S_1$ to $S_n$ assigned respectively the complex weighting coefficients $K_1$ to $K_n$ varying over time according to a sequence defined in table 2 below:

Table 2

|  | Transmitter 1 | Transmitter 2 | Transmitter 3 | Transmitter n-1 | Transmitter n |
|---|---|---|---|---|---|
| T1 | $S_1=K_1.S$ | $S_2=K_2.S$ | $S_3=K_3.S$ | $S_{n-1}=K_{n-1}.S$ | $S_n=K'_n.S$ |

(continued)

|  | Transmitter 1 | Transmitter 2 | Transmitter 3 | Transmitter n-1 | Transmitter n |
|---|---|---|---|---|---|
| T2 | $S_1=K_1.S$ | $S_2=K_2.S$ | $S_3=K_3.S$ | $S_{n-1}=K'_{n-1}.S$ | $S_n=K_n.S$ |
| T3 | $S_1=K_1.S$ | $S_2=K_2.S$ | $S_3=K'_3.S$ | $S_{n-1}=K_{n-1}.S$ | $S_n=K_n.S$ |
| Tm-1 | $S_1=K_1.S$ | $S_2=K'_2.S$ | $S_3=K_3.S$ | $S_{n-1}=K_{n-1}.S$ | $S_n=K_n.S$ |
| Tm | $S_1=K'_1.S$ | $S_2=K_2.S$ | $S_3=K_3.S$ | $S_{n-1}=K_{n-1}.S$ | $S_n=K_n.S$ |

Hence, the complex weighting coefficients $K_1$ to $K_n$ are selected in such a way that for at least a couple of transmitters (k, l), the ratio $(K_k/K_l)_m$ of weighting coefficients used by the transmitters k and l at interval m are different to the ratio $(K_k/K_l)_{m+1}$ of weighting coefficients used by the transmitters k and l at an interval following the interval m, k and l defining different transmitters and m a time interval. The complex weighting coefficients are of type:

K=R.exp(i$\theta$), R representing the module of the coefficient, relative to the power of the signal transmitted, $\theta$ its argument, relative to the phase shift of the signal transmitted and i a pure (in the mathematical sense) imaginary complex number of module 1.

An advantage of such an implementation is that the assignation of weighting coefficients to signals transmitted by the transmitters facilitates the identification of the transmitters by a receiver for the purposes particularly of network management or broadcast of services adapted to the position of the receiver with respect to the transmitters for example.
Another advantage is that the power of the signal received is overall improved due to the mixing of transmission conditions by the application of weighting coefficients that vary over time over the set of transmitters. This avoids that a receiver be penalized for a prolonged period by destructive combinations of signals transmitted by different transmitters.
Advantageously, the weighting coefficients are applied to the transmitters or subsets of transmitters according to a sequence fixed in time, for example according to a regular or irregular cycle. According to a variant, the sequence of assignation of coefficients to transmitters varies in time and is a function for example of an event, a receiver request, a request of a transmitter, a server and/or a network controller. According to a variant, a receiver requires the modification of the weighting coefficient applied to a transmitter or subset of transmitters specific to a determined instant (determined for example by the receiver, a transmitter(s) and/or a network manager) for the purpose for example of maintenance, verification of a specific transmitter. The weighting coefficient remains thus applied to the transmitter until reception of a second request from the receiver or until expiration of a temporization. According to a variant, the receiver request asking for the modification of the coefficient comprises information relating to the duration of the application of the coefficient to the transmitter.
According to a variant, the transmitters of the system are of MIMO type and have more than one transmission antennas. The signals transmitted by each antenna of a MIMO transmitter are coded by a MIMO type coding well known in the art. A same complex weighting coefficient is then applied to all signals transmitted by all antennas of the same transmitter 4. In other words, a given complex weighting coefficient is assigned to a given transmitter, and so for each transmitter.
According to a specific mode of the invention the system 1 comprises at least two subsets of transmitters each comprising at least two transmitters A complex weighting coefficient $K_1$ is thus applied to the signals transmitted by each of the transmitters of a first subset and complex weighting coefficient $K_2$ to signals transmitted by each of the transmitters of a second subset and so on and so forth. Within each subset, at least one transmitter transmits the data encoded via a first encoder 20 and at least a second transmitter transmits the data, identical or not to that transmitted by the first transmitter, encoded via a second encoder different to the first encoder 20. The data is transmitted synchronously and at the same frequency. The first and second transmitters of a subset function as respectively a first antenna and a second antenna of a MIMO transmitter. Two such transmitters of the same subset form a cooperative MIMO system.
According to another variant and for a transmitter having more than one antenna, the weighting coefficient applied to the signal transmitted by a first antenna modifies the power of the signal, reducing it or raising it. In the case where the coefficient reduces the power of the signal transmitted by the first antenna, the difference in transmitting power between the nominal power and the transmitting power is then carried over to the other antennas. For example, in the case where the transmitter has two antennas, if the transmitting power of the first antenna is assigned a weighting coefficient equal to 0.9, that is to say where the value of the coefficient module R=0.9 and the value of the argument is $\theta=0$, the transmitting power of the second antenna will then be assigned a coefficient equal to 1.1 (R=1,1 and $\theta=0$). Inversely, if the coefficient applied to the signal of the first antenna increases the transmitting power, the transmitting power of the second antenna will be reduced as much. This variant thus offers the advantage of maintaining the power at its best level and constant for a given transmitter.

Advantageously, the weighting coefficient applied to the signal transmitted by a first transmitter modifies the signal power by reducing it or increasing it. In the case where the coefficient reduces the power of the signal transmitted by the first transmitter, the difference in power of the transmission between the nominal power and the transmitting power is then carried over to one or more transmitters not belonging to the same subset as the first transmitter, so that the transmitting power of the set of transmitters is constant.

According to a particular embodiment in which system 1 comprises two transmitters (or subsets of transmitters each comprising at least one transmitter), the first weighting coefficient $K_1$ takes the value $K_1=0$ for the first time interval T1 and $K'_1$ takes a value different than 0 for the second time interval T2. According to this embodiment, no signal is therefore transmitted during the first time interval T1 by the first transmitter. This embodiment presents the advantage of being particularly simple to implement.

According to another embodiment of the invention $K_1$ takes a value determined during the first time interval T1 and $K'_1$ takes the inverse value to the value taken by $K_1$ during the second time interval. Advantageously, $K_1$ takes the value 1 and $K'_1$ the value -1, or the inverse. Analogically, other values can be used, such as all values of a general form $K_1=\exp(i*\theta)$ et $K'_1=-\exp(i*\theta)$, where $\theta$ is an angle comprised between 0 and $2\pi$ radians (the preceding example in which $K_1=1$ corresponds to the case where $\theta=0$ rad): all of these values cause no modification in the overall transmitting power that remains maximal. According to a variant $K'_n=\alpha.K_n$, $\alpha$ being a complex or real number other than 1.

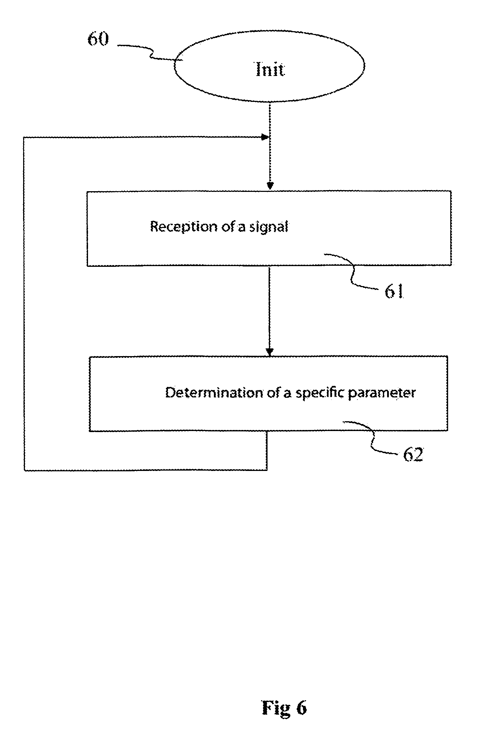

**Figure 6** shows a method for reception of a signal implemented in a receiver 5, according to a non-restrictive particularly advantageous embodiment of the invention.

During an initialisation step 60, the various parameters of each receptor 5 are updated. In particular, the parameters corresponding to the signals received and to the corresponding sub-carriers are initialised in any manner (for example, following the reception of initialisation messages transmitted by one of the transmitters, a server of system 1, or by operator commands).

Then during a step 61, the receiver 100 receives a signal formed from the combination of signals transmitted by a plurality of transmitters 101, 102 and 103. According to an embodiment, the transmitters 101 and 102 form a first subset of transmitters and the transmitter 103 forms itself a second transmitter subset of system 1. The signal thus received by the receiver 100 comprises a first signal transmitted by each transmitter 101, 102 of the first subset and a second signal transmitted by the transmitter 103. The first signal transmitted is assigned a first complex weighting coefficient $K_1$. It takes two different values respectively over a first time interval T1 and a second time interval T2. The second signal is assigned a second complex weighting coefficient $K_2$, as described previously.

Then during a step 62, the receiver 100 determines a parameter specific to each subset of transmitters having contributed to the transmission of the combined signal received, the specific parameter enabling identification of a subset of transmitters or a specific transmitter by the receiver. This determination is rendered possible by the assignation of weighting coefficients to signals transmitted by each of the transmitters. In the case where each subset is only composed of a single transmitter, it is the determination of a specific parameter for each transmitter that is carried out. In the case where a coefficient $K_1$ is applied to the transmitters forming a subset 10 and a coefficient $K_2$ is applied to the transmitter 103, the specific parameters determined are respectively those of the subset 10 and those of the transmitter 103. The receiver has information relating to the sequence of the application of complex weighting coefficients to the transmitters (or subsets of transmitters) according to temporal intervals T1 and T2. The determination of specific parameters is resumed then upon the resolution of two equations with two unknowns, equations of type 1 and 2 defined below, in which the unknowns are the specific parameters of the subset 10 and the transmitter 103. Examples of parameters specific to a transmitter or a subset of transmitters are: the signal contribution of the transmitter (or the subset of transmitters) in the transmission of signals by the different transmitters (or subsets of transmitters) forming the combined signal received by the receiver, the energy contribution of the transmitter (or subset of transmitters) the position of the transmitter (or subset of transmitters, the localisation of the subset corresponding for example to the barycentre of the subset). It is understood by signal contribution, power contribution, values of this scale comprising notably the average value determined on several sub-carriers or frames of signals regularly spaced and weighted with complex coefficients, the punctual value determined for example for a single sub-carrier or for a single group of sub-carriers or a frame of data, a value close to these scales determined for example from models founded on experiment, measurements or simulations.

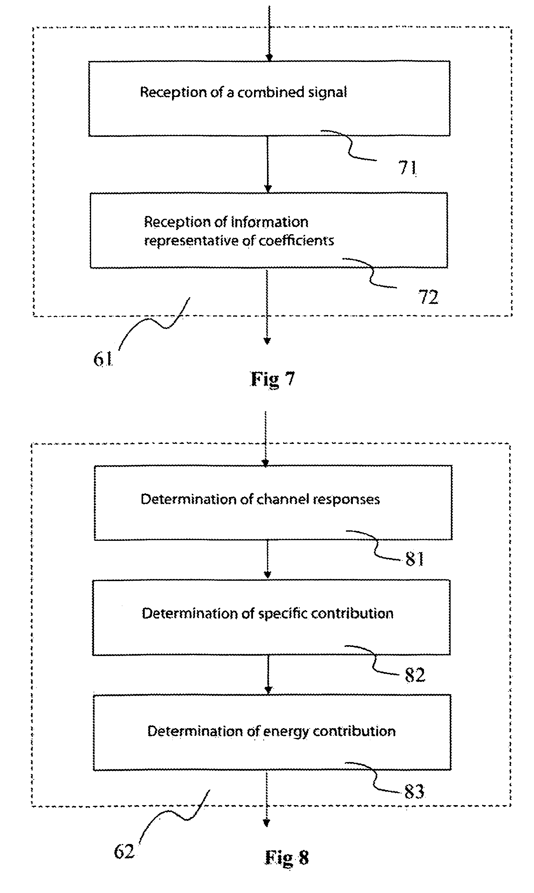

According to a variant shown in **figure 7**, step 61 comprises a step 71 of reception of a combined signal and a step 72 of reception of information representative of weighting coefficients each associated with a transmitter. Information relating to the assignation of complex weighting coefficients according to time intervals is information received by the receiver during step 72, which can be anterior, concomitant or post reception of the combined signal shown in step 71. This information is for example transmitted by transmitters during reception within the coverage areas of these transmitters, or by simply one of them. According to a variant, this information is also combined with useful data broadcast by the transmitters.

Advantageously, step 72 is implemented on installation of the receiver, following a specific event (for example, displacement of the receiver, loss of signal, reduction or augmentation greater than a threshold determined at the level of reception of a combined signal, server request, expiration of a temporization, etc.)

According to another variant, the data describing the sequence of assignment of complex weighting coefficients according to time intervals to transmitters are entered in the RAM memory of the receiver. This data is transmitted by a network manager by any means and notably via a dedicated message transmitted (for example by means of a wireless channel using the transmitters or another wired network) by a server or transmitter to the receiver or inputs via an MMI (Man Machine Interface) interface.

According to an embodiment, the method for reception implemented by the receiver 5 comprises a step of differentiation of signals transmitted by a plurality of transmitters of MIMO type or of cooperative MIMO type. In the case of MIMO transmitters, a different MIMO encoding is applied to signals transmitted by each of the antennas of a transmitter. The transmitters have for example, two antennas. A first MIMO encoding is then applied to data transmitted by each first antenna of each of the transmitters and a second different MIMO encoding is applied to data transmitted by each second antenna of each of the transmitters. According to a variant, only some of the transmitters (at least one transmitter) have two antennas and the other transmitters have a single antenna. The second MIMO encoding is then applied only to data transmitted by the second antenna of corresponding transmitters. In the case of transmitters forming a cooperative MIMO system, each of the transmitters belonging to the cooperative MIMO system applies for example a specific MIMO encoding for each transmitter. In the case where the cooperative MIMO system is formed of two transmitters, a first encoding is applied to data transmitted by the first transmitter and a second encoding different to the first is applied to data transmitted by the second transmitter. In a MIMO system, whether cooperative or not, the receiver 5 decodes the signal received from the combination of signals transmitted by the plurality of antennas according to any of the techniques known to those skilled in the art.

**Figure 8** shows a particular embodiment of step 62 by the receiver 5.

Step 62 begins with a step 81, during which the receiver 100 of system 1 determines a first channel response to system 1 from the combined signal received, that is a combination of signals transmitted by the transmitters of subset 10 on one hand and the transmitter 103 on the other hand, for the first time interval T1 and determines a second channel response of system 1 from the combined signal received for the second time interval.

For the first time interval T1, the receiver measures the channel response of the system for T1, the channel response following the formula:

$$h_{T1} = K_1.C_{tx1} + K_2.C_{tx2} \qquad\qquad \text{(equation 1)}$$

$h_{T1}$ being the channel response of the system for T1,

$C_{tx1}$ being the contribution specific to the subset 10 to the system channel response, $C_{tx1}$ according to the formula:

$C_{tx1} = h_{tx1} \cdot \sqrt{P_{tx1}}$ in which $h_{tx1}$ designates the channel response of the pair (subset 10, receiver 100) and $P_{tx1}$ designates the reference transmitting power, that is to say the nominal power non-weighted of subset 10, and $C_{tx2}$ being the specific contribution of the transmitter 103 to the channel response of the system, $C_{tx2}$ according to the formula:

$C_{tx2} = h_{tx2} \cdot \sqrt{P_{tx2}}$ in which $h_{tx2}$ designates the channel response of the pair (transmitter 103, receiver 100) and $P_{tx2}$ designates the reference transmitting power, that is to say the nominal non-weighted power of the transmitter 103.

For the second time interval T2, the receiver measures the channel response of the system for T2, the channel response according to the formula:

$$h_{T2} = K'_1.C_{tx1} + K_2.C_{tx2} \qquad\qquad \text{(equation 2)}$$

With $h_{T2}$ being the channel response of the system for T2,

If the propagation channel has remained stable during the time intervals T1 and T2, that is to say if the sum of T1+T2 is less than the coherency time of the propagation channel or if the receiver carries out the measurements of $h_{T1}$ and $h_{T2}$ respectively at the end of T and at the start of T2 so that the measurement time by the receiver is less than the coherency time of the channel, and if the reference transmitting powers $P_{tx1}$ and $P_{tx2}$ have remained constant during the time intervals T1 and T2, the specific contributions of subset 10 and the transmitter 103 during a step 82 are obtained by subtraction of equations 1 and 2 and division of the differences of the weighting coefficients:

$$C_{tx1} = (h_{T1}-h_{T2})/(K_1-K'_1) \qquad \text{(equation 3)}$$

By weighting equations 1 and 2 with K'1 and K2 instead of K1 et K2 respectively, the following is obtained from the equations 1 and 2 thus weighted:

$$C_{tx2} = (K'_1 h_{T1}-K_1 h_{T2})/(K_2.(K'_1-K_1)) \qquad \text{(equation 4)}$$

According to a variant, the receiver measures $h_{T1}$ at an instant t1 anywhere in the interval T1 and $h_{T2}$ at an instant t2 anywhere in the interval T2. The receiver then deduces by interpolation the value of $h_{T2}$ corresponding to t1 and the value of $h_{T1}$ corresponding to t2. The receiver then determines $C_{tx1}$ and $C_{tx2}$ according to equations 3 and 4 at instants t1 and/or t2 from the values measured and interpolated corresponding to $h_{T1}$ and $h_{T2}$.

Some values taken by the weighting coefficients are particularly advantageous. For example, when $K_1$ takes the value 0 and $K'_1$ a non-null value (or inversely), the specific contributions can be deduced directly from the channel responses of the first and second time intervals T1 and T2. However, the value $K_1=0$ has the effect of completely cancelling the transmitting of the signal during the time interval. If this is acceptable for a transmitter having more than one transmitting antenna, it can reduce the transmitting performances in a MIMO transmitting system as this leads to complete cancellation of the transmission of a given transmitter during a time interval. The broadcast performance is thus improved when none of the weighting coefficients are null. According to another example particularly advantageous, $K_1$ and $K'_1$ are opposite values, for example when $K_1$ has a value of 1 and $K'_1$ (-1). These values in fact lead to a simple evaluation of specific contributions as the measurement of channel responses is equal to twice the specific contribution of a transmitter or subset. In addition, the parameter setting of these values does not require any modification in the transmitting power, that is to say there is no change in the charge of the power amplifier: a purely digital processing is therefore sufficient. Analogically, other values can be used, such as all values of a general form $K_1=\exp(i*\theta)$ and $K'_1=-\exp(i*\theta)$, where $\theta$ is an angle comprised between 0 and $2\pi$ radians (the preceding example in which $K_1=1$ corresponds to the case where $\theta=0$ rad): all of these values cause no modification in the transmitting power. The weightings correspond then to phase shifts.

Next, during a step 83, the receiver deduces the energy contribution of subset 10 and the transmitter 103 from the combined signal and the specific parameters, for example the specific contributions, at respectively the subset 10 and the transmitter 103. For a single-carrier system, the energy contribution is proportional to $|C_{tx1}|^2$ for the subset 10 and respectively $|C_{tx2}|^2$ for the transmitter 103. For an OFDM system, the energy contribution of an OFDM symbol is the sum of energy contributions of each of the sub-carriers obtained according to any of the techniques known to those skilled in the art, according to the following formula:

$$E_{tx} = \sum_{n=0}^{N} \left| h_f(n) \right|^2 \text{ , where } h_f(n) \text{ is the channel response for the sub-carrier n.}$$

According to a variant, the energy contribution is determined directly by the receiver without determination of the specific contributions, for example by a gain controller, for particular values of weighting coefficients, notably for pure real coefficients, for example for $K_1=0$ or $K_1=1$ and $K_1=-1$.

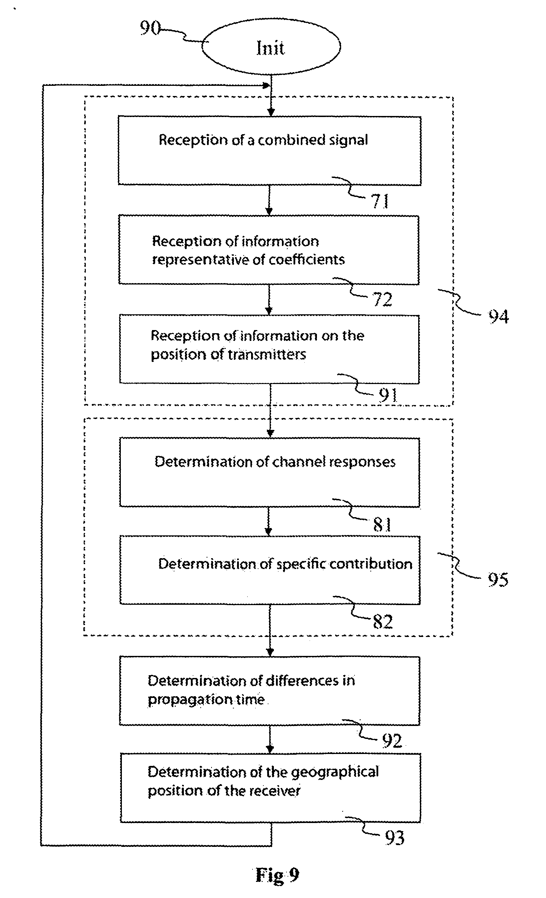

**Figure 9** shows a method for reception implemented by the receiver 5, according to a particular embodiment of the invention. Some steps are similar to the steps previously described and have the same references.

During an initialisation step 90, the various parameters of each receiver 5 are updated. In particular, the parameters corresponding to the signals received and to the corresponding sub-carriers are initialised in any manner (for example, following the reception of initialisation messages transmitted by the transmitters of system 1, a server, or by operator commands).

Then, during a step 94 subdivided into steps 71, 72 previously described and 91, the receiver receives a combined signal, an item of information representative of complex weighting coefficients applied to signal transmitted by transmitters according to time as well as information relating to the geographical position of the transmitters. Step 91 is carried out at any moment before a step 93 of determination of the geographical position of the receiver. According to an advantageous variant, the information received during this step is combined with the useful signal transmitted by the transmitters or with information relating to complex weighting coefficients according to time. Step 91 is facultative and cannot be executed without affecting the reception method. According to a variant, the data relating to the geographical position of transmitters is entered by a user via an MMI type interface in the RAM memory of the receiver.

During a step 95 subdivided into two step 81 and 82 previously described, the receiver determines the channel responses to deduce the specific contribution of the subset 10 and the transmitter 103.

During a step 92, the receiver calculates the difference in propagation times of signals transmitted on one hand by the subset 10 and on the other hand by the transmitter 103 respectively, or more generally from the specific parameters of the subset 10 and the transmitter 103. From the contributions of each of the transmitters or transmitter subsets and for each of the sub-carriers, is deduced the corresponding propagation channel pulse response according to any of the techniques known to those skilled in the art (for example by inverse Fourrier transform). From this pulse response, a propagation delay relative to a transmitter (or set of transmitters) with respect to another is determined for each of the transmitters or sets of transmitters. Advantageously, the determined propagation delay is that corresponding to a shorter propagation path between a transmitter and the receiver.

Finally, during a step 92, the receiver determines its geographical position, either in a relative way with respect to the subset 10 and transmitter 103, particularly if the receiver does not have absolute geographical position information of transmitters, or in an absolute way. Determination of the geographical position of the receiver is made according to any technique known to those skilled in the art, such as for example triangulation or from local models established by experience via the standard receivers for example. These methods have the advantage of an accurate determination of the geographical position of the receiver. According to a variant, the determination of receiver's position is done by approximation from two transmitters or sub-sets of transmitters, the position of the receiver being then defined by a possible localization area of the transmitter and not by an accurate point.

According to a variant, the receiver transmits data representative of its position (for example its relative position, its absolute position, the position being precise or corresponding to an area) intended for example for one or more transmitters, a network server, a network manager (by any means particularly by dedicated message transmitted (for example by means of a wireless channel using the transmitters or another wire network)).

Naturally, the invention is not limited to the embodiments previously described.

In particular, the invention is not limited to a system comprising two subsets but also extends to a system comprising more than two transmitter subsets. In the same way, a subset is indifferently defined by a transmitter or a plurality of transmitters. In the case where the subset only comprises one transmitter, the specific parameter is a parameter characteristic of the transmitter and in the case where the subset comprises more than on transmitters, the specific parameter is a parameter characteristic of the subset seen in its entirety.

According to a variant, the transmitter subsets vary in time, that is to say that a transmitter or transmitters exit a subset or are added.

The invention also applies to a transmitter of a plurality of transmitters transmitting a signal synchronously, at a same frequency and representative of the same data encoded with a same code as the signals transmitted by the plurality of transmitters or to a method for transmitting applied to such a transmitter.

According to a variant of the invention, the method for reception comprises a determination of the energy contribution of each transmitter in the transmission of different signals forming the combined signal received by the receiver. According to a particular embodiment of the invention, the method for reception comprises, from the determined energy contribution, a determination, of areas where the signal reception is less than a minimum threshold (signal considered to be too weak) and those where signal reception is greater than a maximum threshold (signal considered to be too strong). According to another embodiment of the invention, the method for reception comprises, from the determined energy contribution, determination of a real coverage area of a transmitter or a set of transmitters (more precise determination than the simple awareness of the planned coverage area). According to a variant of the invention, the method comprises transmitting of information representative of the energy contribution of one or more transmitters and/or one or more group of transmitters to one or more transmitter network managers, which enables the manager(s) to hence adjust the network of transmitters by adding, withdrawing and/or displacing a transmitter ort transmitters to improve the coverage of the signal transmission and optimize the transmitters. According to a variant, a statistical analysis of the performances of several receivers in the vicinity of the transmitter for which the transmission signal is corrupted enable the determination of a possible problem at transmitter level, thus facilitating the maintenance of the network of transmitters an targeting the faulty or badly positionned transmitter or transmitters.

According to a variant embodiment, the weighting of a signal transmitted only applies to a part of the signal, for example on a sub-carrier or group of sub-carriers only or on only a part of the regularly spaced fields.

According to a variant, the receiver selects some of the transmitters or subsets of transmitters to determine the parameter specific to each of the transmitters or subsets. In fact, to determine a relative geographical position, only 3 transmitters are for example required to obtain a precise localization of the receiver.

According to another variant, the receiver transmits its geographical position, relative or absolute, and one transmitter or transmitters then transmit a particular service or services intended for the receiver according to the geographical position of the receiver.

**Claims**

1. Method for transmission and reception of a signal by a system (1) a received signal comprising a combination of signals transmitted by a plurality of transmitters (101, 102, 103) synchronously, at a same frequency and representative of the same data coded with a same first code, each transmitter of said plurality transmitting frames at a determined power and phase, **characterized in that** the method comprises the following steps:

   - reception (61) of a combined signal comprising a first signal and second signal,
   the first signal being transmitted and weighted with a first complex weighting coefficient by each transmitter (101, 102) of a first subset (10),
   the second signal being transmitted and weighted with a second complex weighting coefficient by each transmitter (103) of a second subset (103),
   for any couple of time intervals, the ratio of the first and second complex weighting coefficients for at least a first temporal interval being different from the ratio of the first and second complex weighting coefficients for at least a second temporal interval, and
   - determination (62) of a parameter representative of the first subset (10) or of the second subset (103) from the signal received and from an information representative of at least the first and second complex weighting coefficients and the associated time intervals.

2. Method according to claim 1, **characterized in that** it comprises a step of differentiation of signals resulting from a first encoding applied to data transmitted by at least a first antenna and from a second encoding different from the first encoding applied to data transmitted by at least a second antenna,
   a first and a second transmitter comprising respectively the at least a first antenna and the at least a second antenna, or a transmitter comprising the at least first and second antennas.

3. Method according to any of claims 1 to 2, **characterized in that** it comprises a determination step (82) of a specific contribution of the first subset (10) and/or the second subset (103) in the combined signal.

4. Method according to any of claims 1 to 3, **characterized in that** it comprises a step (72) of reception, by a receiver (100), of information representative of the at least first and second complex weighting coefficients and the associated time intervals.

5. Method according to any of claims 1 to 4, **characterized in that** the method comprises a step (83) of determination of the energy contribution of at least a subset from the combined signal and the parameter representative of the at least one subset.

6. Method according to any of claims 1 to 5, **characterized in that** it comprises the steps of:

   - determination (92) of a difference in time for the propagation of signals transmitted between respectively the at least two subsets and the receiver from the combined signal and the parameters representative of the at least two subsets,
   - determination (93) of a position relating to a receiver (100) with respect to the at least two subsets.

7. Method according to claim 6, **characterized in that** it further comprises the steps of:

   - reception (91) of an information representative of the geographical position of the transmitters of at least two subsets,
   - determination (93) of a geographical position of the receiver.

8. Method according to any of claims 6 or 7, **characterized in that** it comprises a step of transmitting of the position of the receiver.

9. Method for transmission of a signal by a plurality of transmitters (101, 102, 103) synchronously, at a same frequency and representative of the same data encoded with a same first code, each transmitter transmitting frames at a determined power and phase, **characterized in that** each transmitter (101, 102) of a first subset (10) transmits a first signal weighted with a first weighting coefficient,
   **in that** each transmitter (103) of a second subset (103) transmits a second signal weighted with a second complex weighting coefficient,

for any couple of time intervals, the ratio of the first and second complex weighting coefficients for at least a first temporal interval being different from the ratio of the first and second complex weighting coefficients for at least a second temporal interval.

10. Method according to claim 9, **characterized in that** said weighting coefficients are assigned temporarily in a cyclical manner.

11. Method according to any of claims 9 or 10, **characterized in that** at least one transmitter of the plurality of transmitters (101, 102, 103) receives a request for modification of the complex weighting coefficient weighting the signal transmitted by said at least one transmitter.

12. Method according to any of claims 9 to 11, **characterized in that** at least the first weighting coefficient or the second weighting coefficient modifies the transmission power of at least a first antenna of at least one transmitter of the first or second subset comprising at least two antennas, the difference in power applied to the first antenna being transferred respectively to the at least one second antenna of said transmitter so that the overall transmission power of said transmitter is constant.

13. Method according to any of claims 9 to 12, **characterized in that** the first weighting coefficient takes a null value for the first temporal interval and a non-null value for the second temporal interval.

14. Method according to any of claims 9 to 12, **characterized in that** the first weighting coefficient takes a determined value for the first temporal interval and an opposite value for the second temporal interval.

**Patentansprüche**

1. Verfahren zur Sendung und zum Empfang eines Signals durch ein System (1), wobei ein Empfangssignal eine Kombination von Signalen, die synchron durch mehrere Sender (101, 102, 103) mit einer selben Frequenz gesendet werden und die dieselben mit einem selben ersten Code codierten Daten repräsentieren, umfasst, wobei jeder der mehreren Sender Rahmen mit einer vorgegebenen Leistung und Phase sendet, **dadurch gekennzeichnet, dass** das Verfahren die folgenden Schritte umfasst:

   - Empfang (61) eines kombinierten Signals, das ein erstes Signal und ein zweites Signal umfasst,
   wobei das erste Signal durch jeden Sender (101, 102) einer ersten Teilmenge (10) gesendet und mit einem ersten komplexen Gewichtungskoeffizienten gewichtet wird,
   wobei das zweite Signal durch jeden Sender (103) einer zweiten Teilmenge (103) gesendet und mit einem zweiten komplexen Gewichtungskoeffizienten und gewichtet wird, wobei das Verhältnis des ersten und des zweiten komplexen Gewichtungskoeffizienten mindestens für ein erstes Zeitintervall von dem Verhältnis des ersten und des zweiten komplexen Gewichtungskoeffizienten mindestens für ein zweites Zeitintervall für jedes Paar von Zeitintervallen verschieden ist, und
   - Bestimmung (62) eines Parameters, der die erste Teilmenge (10) oder die zweite Teilmenge (103) repräsentiert, aus dem empfangenen Signal und aus einer Information, die mindestens den ersten und den zweiten komplexen Gewichtungskoeffizienten und die zugeordneten Zeitintervalle repräsentiert.

2. Verfahren nach Anspruch 1, **dadurch gekennzeichnet, dass** es einen Schritt der Unterscheidung von Signalen, die sich aus einer ersten Codierung, die auf Daten angewendet wird, die durch mindestens eine erste Antenne gesendet werden, und aus einer zweiten Codierung, die von der ersten Codierung verschieden ist, die auf Daten angewendet wird, die durch mindestens eine zweite Antenne gesendet werden, ergeben, umfasst,
   wobei ein erster und ein zweiter Sender die mindestens eine erste Antenne bzw. die mindestens eine zweite Antenne umfasst oder ein Sender die mindestens erste und zweite Antenne umfasst.

3. Verfahren nach einem der Ansprüche 1 bis 2, **dadurch gekennzeichnet, dass** es einen Bestimmungsschritt (82) eines spezifischen Beitrags der ersten Teilmenge (10) und/oder der zweiten Teilmenge (103) in dem kombinierten Signal umfasst.

4. Verfahren nach einem der Ansprüche 1 bis 3, **dadurch gekennzeichnet, dass** es einen Schritt (72) des Empfangs von Informationen, die den mindestens ersten und zweiten komplexen Gewichtungskoeffizienten und die zugeordneten Zeitintervalle repräsentieren, durch einen Empfänger (100) umfasst.

**5.** Verfahren nach einem der Ansprüche 1 bis 4, **dadurch gekennzeichnet, dass** das Verfahren einen Schritt (83) der Bestimmung des Energiebeitrags mindestens einer Teilmenge von dem kombinierten Signal und des Parameters, der die mindestens Teilmenge repräsentiert, umfasst.

**6.** Verfahren nach einem der Ansprüche 1 bis 5, **dadurch gekennzeichnet, dass** es die folgenden Schritte umfasst:

- Bestimmung (92) einer Zeitdifferenz für die Ausbreitung von Signalen, die jeweils zwischen den mindestens zwei Teilmengen und dem Empfänger von dem kombinierten Signal gesendet werden, und der Parameter, die die mindestens zwei Teilmengen repräsentieren,
- Bestimmung (93) einer Lage in Bezug auf einen Empfänger (100) mit Bezug auf die mindestens zwei Teilmengen.

**7.** Verfahren nach Anspruch 6, **dadurch gekennzeichnet, dass** es ferner die folgenden Schritte umfasst:

- Empfang (91) einer Information, die die geographische Lage des Senders mindestens zweier Teilmengen repräsentiert,
- Bestimmung (93) einer geographische Lage des Empfängers.

**8.** Verfahren nach einem der Ansprüche 6 oder 7, **dadurch gekennzeichnet, dass** es einen Schritt des Sendens der Lage des Empfängers umfasst.

**9.** Verfahren zur synchronen Sendung eines Signals durch mehrere Sender (101, 102, 103) mit einer selben Frequenz und die dieselben Daten repräsentieren, die mit einem selben ersten Code codiert worden sind, wobei jeder Sender Rahmen mit einer vorgegebenen Leistung und Phase sendet, **dadurch gekennzeichnet, dass** jeder Sender (101, 102) einer ersten Teilmenge (10) ein erstes Signal sendet, das mit einem ersten Gewichtungskoeffizienten gewichtet worden ist,
dadurch, dass jeder Sender (103) einer zweiten Teilmenge (103) ein zweites Signal sendet, das mit einem zweiten komplexen Gewichtungskoeffizienten gewichtet worden ist, wobei das Verhältnis des ersten und des zweiten komplexen Gewichtungskoeffizienten für mindestens ein erstes Zeitintervall von dem Verhältnis des ersten und des zweiten komplexen Gewichtungskoeffizienten für mindestens ein zweites Zeitintervall für jedes Paar von Zeitintervallen verschieden ist.

**10.** Verfahren nach Anspruch 9, **dadurch gekennzeichnet, dass** die Gewichtungskoeffizienten zeitlich auf zyklische Weise zugewiesen werden.

**11.** Verfahren nach einem der Ansprüche 9 oder 10, **dadurch gekennzeichnet, dass** mindestens ein Sender der mehreren Sender (101, 102, 103) eine Anforderung zur Änderung des komplexen Gewichtungskoeffizienten, der das durch den mindestens einen Sender gesendete Signal gewichtet, empfängt.

**12.** Verfahren nach einem der Ansprüche 9 bis 11, **dadurch gekennzeichnet, dass** mindestens der erste Gewichtungskoeffizient oder der zweite Gewichtungskoeffizient die Sendeleistung mindestens einer ersten Antenne mindestens eines Senders der ersten oder der zweiten Teilmenge, die mindestens zwei Antennen umfasst, ändert, wobei die Differenz der an die erste Antenne angelegten Leistung jeweils an die mindestens eine zweite Antenne des Senders übertragen wird, sodass die Gesamtübertragungsleistung des Senders konstant ist.

**13.** Verfahren nach einem der Ansprüche 9 bis 12, **dadurch gekennzeichnet, dass** der erste Gewichtungskoeffizient für das erste Zeitintervall einen Wert null annimmt und für das zweite Zeitintervall einen von null verschiedenen Wert annimmt.

**14.** Verfahren nach einem der Ansprüche 9 bis 12, **dadurch gekennzeichnet, dass** der erste Gewichtungskoeffizient für das erste Zeitintervall einen bestimmten Wert annimmt und für das zweite Zeitintervall einen entgegengesetzten Wert annimmt.

**Revendications**

**1.** Procédé de transmission et de réception d'un signal par un système (1), un signal reçu comprenant une combinaison de signaux émis par une pluralité d'émetteurs (101, 102, 103) de façon synchrone, à une même fréquence et représentatifs de mêmes données codées avec un même premier code, chaque émetteur de ladite pluralité émettant des trames à une puissance et une phase déterminées, **caractérisé en ce que** le procédé comprend les étapes suivantes :

- réception (61) d'un signal combiné comprenant un premier signal et un deuxième signal,
le premier signal étant émis et pondéré d'un premier coefficient de pondération complexe par chaque émetteur (101, 102) d'un premier sous-ensemble (10),
le deuxième signal étant émis et pondéré d'un deuxième coefficient de pondération complexe par chaque émetteur (103) d'un deuxième sous-ensemble (103),
pour tout couple d'intervalles temporels, le rapport des premier et deuxième coefficients de pondération complexes pour au moins un premier intervalle temporel étant différent du rapport des premier et deuxième coefficients de pondération complexe pour au moins un deuxième intervalle temporel ; et
- détermination (62) d'un paramètre représentatif du premier sous-ensemble (10) ou du deuxième sous-ensemble (103) à partir du signal reçu et à partir d'une information représentative d'au moins les premier et deuxième coefficients de pondération complexes et des intervalles de temps associés.

2. Procédé selon la revendication 1, **caractérisé en ce qu'**il comprend une étape de différentiation des signaux issus d'un premier codage appliqué aux données émises par au moins une première antenne et d'un deuxième codage différent du premier codage appliqué aux données émises par au moins une deuxième antenne,
un premier et un deuxième émetteurs comprenant respectivement la au moins une première antenne et la au moins une deuxième antenne, ou un émetteur comprenant les au moins une première et deuxième antennes.

3. Procédé selon l'une quelconque des revendications 1 à 2, **caractérisé en ce qu'**il comprend une étape de détermination (82) d'une contribution propre du premier sous-ensemble (10) et/ou du deuxième sous-ensemble (103) dans le signal combiné.

4. Procédé selon l'une quelconque des revendications 1 à 3, **caractérisé en ce qu'**il comprend une étape (72) de réception, par un récepteur (100), de l'information représentative d'au moins les premier et deuxième coefficients de pondération complexes et des intervalles de temps associés.

5. Procédé selon l'une quelconque des revendications 1 à 4, **caractérisé en ce que** le procédé comprend une étape (83) de détermination de la contribution en énergie d'au moins un sous-ensemble à partir du signal combiné et du paramètre représentatif du au moins un sous-ensemble.

6. Procédé selon l'une quelconque des revendications 1 à 5, **caractérisé en ce qu'**il comprend les étapes de :

- détermination (92) d'une différence de temps de propagation des signaux émis entre respectivement les au moins deux sous-ensembles et le récepteur à partir du signal combiné et des paramètres représentatif desdits au moins deux sous-ensembles ;
- détermination (93) d'une position relative d'un récepteur (100) par rapport à les au moins deux sous-ensembles.

7. Procédé selon la revendication 6, **caractérisé en ce qu'**il comprend, en outre, les étapes de :

- réception (91) d'une information représentative de la position géographique des émetteurs des au moins deux sous-ensembles ;
- détermination (93) d'une position géographique du récepteur.

8. Procédé selon l'une quelconque des revendications 6 ou 7, **caractérisé en ce qu'**il comprend une étape d'émission de la position du récepteur.

9. Procédé d'émission d'un signal par une pluralité d'émetteurs (101, 102, 103) de façon synchrone, à une même fréquence et représentatifs de mêmes données codées avec un même premier code, chaque émetteur émettant des trames à une puissance et une phase déterminées, **caractérisé en ce que** chaque émetteur (101, 102) d'un premier sous-ensemble (10) émet un premier signal pondéré d'un premier coefficient de pondération,
**en ce que** chaque émetteur (103) d'un deuxième sous-ensemble (103) émet un deuxième signal pondéré d'un deuxième coefficient de pondération complexe,
pour tout couple d'intervalles temporels, le rapport des premier et deuxième coefficients de pondération complexes pour au moins un premier intervalle temporel étant différent du rapport des premier et deuxième coefficients de pondération complexe pour au moins un deuxième intervalle temporel.

10. Procédé selon la revendication 9, **caractérisé en ce que** lesdits coefficients de pondération sont attribués de manière cyclique temporellement.

11. Procédé selon l'une quelconque des revendications 9 ou 10, **caractérisé en ce qu'**au moins un émetteur de la pluralité d'émetteurs (101, 102, 103) reçoit une requête de modification du coefficient de pondération complexe pondérant le signal émis par ledit au moins un émetteur.

12. Procédé selon l'une quelconque des revendications 9 à 11, **caractérisé en ce qu'**au moins le premier coefficient de pondération ou le deuxième coefficient de pondération modifie la puissance d'émission d'au moins une première antenne d'au moins un émetteur du premier ou du deuxième sous-ensemble comprenant au moins deux antennes, la différence de puissance appliquée à la première antenne étant reportée respectivement sur la au moins une deuxième antenne dudit émetteur de sorte que la puissance d'émission globale dudit émetteur soit constante.

13. Procédé selon l'une quelconque des revendications 9 à 12, **caractérisé en ce que** le premier coefficient de pondération prend une valeur nulle pour le premier intervalle temporel et une valeur non nulle pour le deuxième intervalle temporel.

14. Procédé selon l'une quelconque des revendications 9 à 12, **caractérisé en ce que** le premier coefficient de pondération prend une valeur déterminée pour le premier intervalle temporel et une valeur opposée pour le deuxième intervalle temporel.

**Fig 1**

**Fig 2**

**Fig 3**

4

42

41                      ROM

**CPU**

| Prog | 420 |
| Physical layer parameters | 421 |
| | |

44

43

RAM

| Prog | 430 |
| Transmission parameters | 431 |
| Input data | 432 |
| Encoded data | 433 |
| Sequencing | 434 |
| Geographical pos. | 435 |
| | |

47    **TX**

48    **Sync**

49    **I/F appli**

**Fig 4**

**Fig 5**

60

Init

Reception of a signal

61

Determination of a specific parameter

62

**Fig 6**

Reception of a combined signal

71

Reception of information
representative of coefficients

72

61

**Fig 7**

Determination of channel responses

81

Determination of specific contribution

82

Determination of energy contribution

83

62

**Fig 8**

90 — Init

Reception of a combined signal — 71

Reception of information representative of coefficients — 72

Reception of information on the position of transmitters — 91

94

Determination of channel responses — 81

Determination of specific contribution — 82

95

Determination of differences in propagation time — 92

Determination of the geographical position of the receiver — 93

**Fig 9**

**Fig 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. J. FOSCHINI.** Layered Space-Time Architecture for Wireless Communication in a Fading Environment When Using Multiple Antennas. *Bell Labs Technical Journal,* 1996, vol. 1 (2), 41-59
- **J.-C. BELFIORE ; G. REKAYA ; E. VITERBO.** The Golden Code: A 2 x 2 Full-Rate Space-Time Code with Non-Vanishing Determinants. *IEEE Transactions on Information Theory,* April 2005, vol. 51 (4), 1432-1436

- **V.TAROKH ; H. JAFARKHANI ; R. A. CALDER-BANK.** Space-Time block codes from orthogonal designs. *IEEE Transactions on Information Theory,* July 1999, vol. 45, 1456-1467
- A simple transmit diversity technique for wireless Communications. *IEEE Journal on selected area in communications,* October 1998